# EUROPÄISCHE PATENTSCHRIFT

(11) **EP 2 649 563 B1**
(45) Veröffentlichungstag und Bekanntmachung des Hinweises auf die Patenterteilung: **27.08.2014**
(21) Anmeldenummer: 11793679.9
(22) Anmeldetag: 09.12.2011
(51) Int. Cl.: G06K 19/073

(54) **TRAGBARER DATENTRÄGER MIT ECHTHEITSPRÜFUNG DURCH VERFORMUNG**
PORTABLE DATA CARRIER WHICH CAN BE CHECKED FOR ITS AUTHENTICITY BY DEFORMING IT
SUPPORT DE DONNÉES PORTABLE AVEC CONTRÔLE D'AUTHENTICITÉ PAR DÉFORMATION

(30) Priorität: 10.12.2010 DE 102010054062
(43) Veröffentlichungstag der Anmeldung: 16.10.2013
(73) Patentinhaber: Giesecke & Devrient GmbH, 81677 München (DE)
(72) Erfinder: BALDISCHWEILER, Michel, 81825 München (DE); ASCHAUER, Hans, 81829 München (DE); RANKL, Wolfgang, 81825 München (DE); GRUNDWÜRMER, Manuela, 81371 München (DE); TARANTINO, Thomas, 83410 Laufen (DE); LUCKE, Susan, 80799 München (DE)
(86) Internationale Anmeldenummer: PCT/EP2011/006227
(87) Internationale Veröffentlichungsnummer: WO 2012/076187

(56) Entgegenhaltungen:
- EP-A2- 1 596 324
- WO-A1-2007/113722
- DE-A1- 19 947 180

## Beschreibung

Die Erfindung betrifft einen tragbaren Datenträger, ein Echtheitsmerkmal, ein Verfahren zur Personalisierung sowie ein Verfahren zur Echtheitsprüfung, wobei aufgrund der Verformung des Datenträgerkörpers ein datenträgerindividueller Verlauf eines messbaren Signals ausgewertet wird.

Bei einem tragbaren Datenträger handelt es sich vorzugsweise um Datenträger mit entsprechenden Sicherheitsfunktionalitäten, wie z.B. Smartcards, Chipkarten, Token, Massenspeicherkarten, Multimediakarten und/ oder um elektronische Identitätsdokumente, wie beispielsweise ein elektronischer Personalausweis, Reisepass mit, auf einem Chip gespeicherten maschinenlesbaren Identifikationsdaten einer Person. Insbesondere wird eine Chipkarte unter dem Begriff tragbarer Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, Identifikationskarte oder Führerschein.

Tragbare Datenträger, insbesondere Chipkarten, stellen bislang keine Funktionalität zur Verfügung, welche es ermöglicht zu prüfen, ob ein integrierter Schaltkreis, welcher in einen Körper des Datenträgers integriert ist, tatsächlich für diesen Datenträgerkörper vorgesehen ist. Eine Manipulation eines Datenträgerkörpers dahingehend, dass ein ursprünglich darin integrierter Chip durch einen anderen Chip ersetzt worden ist, kann somit nicht auf einfache Weise erkannt werden.

Aus der DE 10 2010 052 985, DE 10 2010, 052 983, DE 10 2010 052 992, eingereicht am 30. November 2010 auf deren gesamte Offenbarung hier ausdrücklich Bezug genommen wird, sind Datenträger bekannt, deren Datenträgerkörper als echt verifiziert werden können. Dabei wird die Verformung des Datenträgers mittels eines Dehnungsmessstreifens, kurz DMS, erfasst und der Widerstandswert des DMS mit einem Referenzwiderstandswert verglichen. Dieser ermittelte Widerstandswert wird als Echtheitsmerkmal herangezogen. Zur Verbesserung der Benutzereingaben werden Eckabstützungen des Datenträgers vorgeschlagen.

Dehnungsmessstreifen (DMS) sind in den verschiedensten Bauformen bekannt und werden aus verschiedenen Materialien mittels verschiedener Verfahren hergestellt. Im Zusammenhang mit der vorliegenden Erfindung werden auch solche DMS, welche nicht lediglich in einer linearen Richtung empfindlich sind, also z.B. rosettenartige oder sternförmige Anordnungen von mäanderförmigen Leiterstrukturen, aus Gründen der Einfachheit als Dehnungsmessstreifen bezeichnet. Es können weiterhin aus mehreren einfachen Dehnungsmessstreifen zusammengesetzte Strukturen verwendet werden, die auch - der Einfachheit halber -als Dehnungsmessstreifen bezeichnet werden. All diesen Strukturen ist gemein, dass eine Deformation der Leiterstruktur, beispielsweise aufgrund einer externen Krafteinwirkung, eine Widerstandsänderung der Leiterstruktur zur Folge hat. Das Ausgangssignal des DMS, welches mittels einer mit dem Dehnungsmessstreifen verbundenen Echtheitsprüfvorrichtung detektiert werden kann, ermöglicht in der Folge den Rückschluss auf die mechanische Verformung des Dehnungsmessstreifens.

Vorzugsweise werden die Dehnungsmessstreifen als gedruckte, elektrisch leitfähige Strukturen ausgebildet. Alternativ können Ätzverfahren oder weitere, bekannte Verfahren zum Bilden des Dehnungsmessstreifens zum Einsatz kommen. Der Aufdruck erfolgt in der Regel auf eine Schicht oder Folie, welche in den Datenträgerkörper integriert oder auf diesem aufgebracht wird, beispielsweise durch Laminieren. Die gedruckte, geätzte oder anderweitig hergestellte Struktur ist vorzugsweise mäanderförmig. Auf diese Weise können Dehnungsmessstreifen einfach und kostengünstig in den Datenträger eingebracht werden. Mittels der beschriebenen Druckverfahren ist es insbesondere auf einfache Weise möglich, Dehnungsmessstreifen verschiedenen Typs, insbesondere mit voneinander abweichenden Widerstandswerten, herzustellen. Eine Änderung des Widerstandwertes des Dehnungsmessstreifens kann sich beispielsweise auch durch die Verwendung von Materialien mit unterschiedlicher elektrischer Leitfähigkeit ergeben.

Der Datenträgerkörper des Datenträgers ist derart ausgebildet, dass er ohne äußere Krafteinwirkung in einer vorgegebenen Form verharrt bzw. in diese zurückkehrt; unter äußerer Krafteinwirkung, beispielsweise Verbiegen, jedoch verformbar ist.

Dehnungsmessstreifen sind kostengünstige Bauteile, welche sich aufwandsarm in einen tragbaren Datenträger integrieren lassen. Verdrahtung und Einrichtung zum Detektieren der Widerstandswerte erfordern lediglich einfachste Verschaltungen. Der Datenträger bleibt unanfällig gegen äußere Einflüsse, beispielsweise mechanische oder Umwelteinflüsse. Gleichzeitig ist es möglich, mittels Dehnungsmessstreifen leichteste Verformungen des Datenträgerkörpers zu erkennen und somit verschiedene Verformungen zu unterscheiden.

Es hat sich allerdings herausgestellt, dass die in der DE 10 2010 052 985 beschriebenen Widerstandswerte, die bei Verformung des Datenträgers erfasst werden, als Echtheitskriterium nicht ausreichend sind, sodass eine Manipulation bzw. Simulation dieser Widerstandswerte sehr einfach ist.

WO 2007/113722 offenbart eine Chipkarte mit einen Dehnungsmessstreifen der aufgrund einer Verformung der Chipkarte ein messbares Signal erzeugt.

Der Erfindung liegt daher die Aufgabe zugrunde, die tragbaren Datenträger manipulationssicherer zu machen, wobei der Datenträgerkörper weiterhin kostengünstig hergestellt werden soll.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Die Aufgabe wird gemäß Hauptanspruch durch einen tragbaren Datenträger mit einem verformbaren Datenträgerkörper und einer Echtheitsprüfvorrichtung gelöst. Die Echtheitsprüfvorrichtung umfasst zumindest einen in den Datenträgerkörper eingebrachten Dehnungsmessstreifen. Der Dehnungsmessstreifen erzeugt aufgrund einer Verformung des Datenträgers ein messbares Signal. Die Echtheit des Datenträgers ist aufgrund eines datenträgerindividuellen Verlaufs des messbaren Signals verifizierbar.

Als datenträgerindividuell wird im Folgenden die Eigenschaft des Signals verstanden, bei Verformung des Datenträgers ein, für den Datenträgerkörper charakteristisches Signal zu erzeugen, beispielsweise einen signifikanten Zeitverlauf, Amplitudenverlauf und/oder Frequenzverlauf. Hierbei wird der Verlauf der Widerstandsänderung pro Zeit in der Anmeldung als Signalverlauf verstanden. Dieser Verlauf ist nur für diesen Datenträgerkörper charakteristisch. Ein Datenträgerkörper, der mit einer identischen Kraft verformt wird, weist einen alternativen Signalverlauf auf. Der Verlauf des Signals, erzeugt vom DMS bei Verformung des jeweiligen Datenträgerkörpers, ist reproduzierbar ist und kann als Unterscheidungsmerkmal zu anderen Datenträgerkörpern herangezogen werden. Die Überprüfung dieses Merkmals entspricht somit einer Überprüfung der Echtheit des Datenträgerkörpers.

Eine Verformung des Datenträgerkörpers kann durch den zumindest einen Dehnungsmessstreifen detektiert werden. Hierzu ist die Echtheitsprüfvorrichtung mit dem Dehnungsmessstreifen verbunden, die den bei Verformung auftretenden messbaren Signalverlauf erkennt. Die Echtheitsprüfvorrichtung ist in der Regel Teil eines integrierten Schaltkreises des Datenträgers.

Auf diese Weise ist es praktisch unmöglich, einen integrierten Schaltkreis aus einem Datenträgerkörper herauszutrennen - und dabei von den in dem Datenträgerkörper angeordneten Dehnungsmessstreifen zu trennen - und anschließend in einen neuen Datenträgerkörper einzubetten und mit darin angeordneten Dehnungsmessstreifen zu verbinden, welche bei gleicher, vorgegebener Verformung einen gleichen Widerstandswert besitzen.

Bevorzugt wird der datenträgerindividuelle Signalverlauf nach der Fertigstellung des Datenträgers während der Personalisierung durch Verformung des Datenträgerkörpers ermittelt und als Referenzsignalverlauf in einem Speicherbereich, bevorzugt einem nichtflüchtigen Speicher ROM abgelegt. Bei jeder Echtheitsprüfung im Feld wird der Körper erneut verformt, wodurch der gleiche datenträgerindividuelle Signalverlauf erhalten wird. Durch Vergleichen mit dem abgelegten Referenzwert ist die Echtheit verifiziert. Die Verformung des Datenträgerkörpers muss nicht zwangsläufig mit genau der gleichen Intensität wie bei Ermittlung des Referenzsignalverlaufs durchgeführt werden. Ein tendenziell gleicher Signalverlauf, unter Berücksichtung einer gewissen Fehlertoleranz bei Abweichung, ist dann ausreichend für die Beurteilung der Echtheit des Datenträgerkörpers.

In vorteilhafter Weise wird der Datenträger für die Verformung in eine Aufnahmevorrichtung gelegt, welche den Grad der Verformung des Datenträgers aufgrund ihrer Formgebung vorgibt. Somit ist gewährleistet, dass ein erzeugter Referenzverlauf des DMS-Signals innerhalb vorbestimmter Parameter erzeugt wurde, insbesondere der Grad der Verbiegung und die einwirkende Kraft auf den Datenträgekörper. Bei Überprüfung der Echtheit des Datenträgers im Feld, das heißt nach Auslieferung an den Endbenutzer, wird der Datenträger erneut in eine Aufnahmevorrichtung platziert, um einen Vergleichssignalverlauf zu erzeugen. Dieser Vergleichsverlauf wird mit dem im Datenspeicher abgelegten Referenzverlauf verglichen. Bei Übereinstimmung der Verläufe, insbesondere mit vorgegebenen Fehlertoleranzen, verifiziert die Echtheitsprüfvorrichtung den Datenträger als echt.

In vorteilhafter Weise ist der Dehnungsmessstreifen als Eingabemittel, beispielsweise als Taster, in den Datenträgerkörper eingebracht. Die benutzerseitige Betätigung des Eingabemittels verursacht die Verformung des Datenträgers. Der Tastendruck ist ein digitales Signal, sodass dieser durch einen integrierten Halbleiterchip weiterhin erkannt wird. Somit ist der datenträgerindividuelle Verlauf des Signals unkritisch für die Funktion des DMS als Taster.

Insbesondere sind aufgrund des Aufbaus des Datenträgerkörpers datenträgerindividuelle lineare und/oder nichtlineare Verzerrungen im Signalverlauf enthalten. Diese Verzerrungen können in der Echtheitsprüfvorrichtung mittels Frequenzanalysealgorithmen, beispielsweise einer FourierTransformation oder eines FIT-Algorithmus ermittelt und ausgewertet werden.

Der Datenträgerkörper des Datenträgers kann mehrschichtig ausgebildet sein, wobei die Schichten in unterschiedlichen Dicken beispielsweise durch Laminieren in Form von Kunststofflagen verbunden werden. Der zumindest eine Dehnungsmessstreifen kann beispielsweise auf einer Deckschicht oder zwischen zwei Kunststofflagen im Inneren des Datenträgerkörpers angeordnet sein.

Der Datenträger wird nun derart gefertigt, dass der Datenträgerkörper nach der Fertigung eine mechanische Spannung aufweist. Die mechanische Spannung, ist eine Kraft pro Flächeneinheit, die in einer gedachten Schnittfläche durch den Datenträgerkörper wirkt. Dies wird beispielsweise durch Laminieren unterschiedlicher Materialien, beispielsweise PVC, PE, PET, ABS oder PC erreicht. Die dadurch entstehenden linearen Verzerrungen im Signalverlauf bei Verformung sind für jeden Datenträger verschieden. Werden mehrere Kunststofflagen mechanisch verspannt, entstehen nichtlineare Verzerrungen, die das erzeugte Signal weiter individualisieren. Nichtlineare Verzerrung des Signals bedeutet, dass bei Verformung des Datenträgers der Verlauf des gemessenen Signals, insbesondere ein Widerstandssignalwert pro Zeit nicht linear proportional zur Verformung des Datenträgers ist. Diese Verzerrungen können Sprünge aufweisen, sodass der datenträgerindividuelle Verlauf unstetig ist.

Durch Verdrehen der Kunststofffolien relativ zueinander während der Fertigung wird ebenfalls eine mechanische Spannung erzeugt, die zu Verzerrungen im Signalverlauf führen.

Vorteilhaft ist es, den Dehnungsmessstreifen mittels Klebemittel in den Datenträger einzubringen. Beim Laminieren des DMS mit Klebemittel kann es zu Lufteinschlüssen kommen, insbesondere durch Ausgasen des Klebemittels aufgrund des Laminierprozesses. Diese Lufteinschlüsse individualisieren den Signalverlauf zusätzlich. Da diese Lufteinschlüsse zufällig groß und an unterschiedlichen Positionen sind, individualisieren sie den Signalverlauf.

Bevorzugt wird ein zusätzliches Material bei der Fertigung des Datenträgers in den Datenträgerkörper eingebracht. Das zusätzliche Material kann als Gitterstruktur in einem beliebigen Raster eingebracht sein. Als Materialien sind insbesondere Kohlefasern, Glasfasern und /oder Gewebefasern verwendbar, da diese gut einlaminiert werden können. Wird der DMS unmittelbar oberhalb oder unterhalb der Gitterstruktur angeordnet, entstehen Signalverzerrungen. Der Effekt lässt sich weiter steigern, indem die Lage und/ oder die Position des DMS variiert werden.

Alternativ zur Gitterstruktur wird das zusätzliche Material in Form von Partikeln in den Datenträgerkörper eingebracht. Anzahl, Größe und Material der Partikel sind als freie Parameter beliebig wählbar.

Die genannten Maßnahmen zur Individualisierung des durch den DMS bei Verformung erzeugten Signalverlaufs lassen sich selbstverständlich beliebig kombinieren, da somit ein wesentlich höherer Grad eines datenträgerindividuellen Signalverlauf erhalten wird.

Weiterhin ist ein Echtheitsmerkmal für einen tragbaren Datenträger aufweisend einen Dehnungsmessstreifen zur Erzeugung eines datenträgerindividuellen Verlauf eines Signals durch Verformung des Datenträgerkörpers vorgesehen. Hierbei wird die Echtheit durch Auswerten des Signalverlaufs verifiziert, wobei der Signalverlauf lineare und /oder nichtlineare Verzerrungen aufgrund des Aufbaus des Datenträgerkörpers aufweist.

Weiterhin sind ein Verfahren zur Personalisierung eines tragbaren Datenträgers und ein Verfahren zur Echtheitsprüfung eines tragbaren Datenträgers vorgesehen.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: einen Querschnitt eines erfindungsgemäßen tragbaren Datenträger;
- Figur 2: eine Draufsicht auf einen in Figur 1 dargestellten Datenträger;
- Figur 3: eine detailliertere Darstellung des in Figur 1 dargestellten Datenträgers;
- Figur 4: eine Darstellung der Verformung des Datenträgers zur Erzeugung des datenträgerindividuellen Verlaufs des Signals;
- Figur 5: ein Beispiel eines datenträgerindividuellen Signalverlaufs eines dreifach betätigten DMS-Tasters, ohne Lufteinschluss laminiert;
- Figur 6: ein zur Figur 5 alternatives Beispiel eines datenträgerindividuellen Signalverlaufs eines dreifach betätigten DMS-Tasters, mit 50% Lufteinschluss laminiert;
- Figur 7: ein zur Figur 5 alternatives Beispiel eines datenträgerindividuellen Signalverlaufs eines zweifach betätigten DMS-Tasters, mit Lufteinschluss in den Eckbereichen laminiert;
- Figur 8: ein zur Figur 5 alternatives Beispiel eines datenträgerindividuellen Signalverlaufs eines dreifach betätigten DMS-Tasters, ohne Klebemittel laminiert;
- Figur 9: eine Detailskizze eines einlaminierten DMS mit einem in Gitterstruktur eingebrachten Material;
- Figur 10: eine Detailskizze eines alternativ zu Figur 9 einlaminierten DMS mit zwei unterschiedlichen, in Gitterstruktur eingebrachten Materialien;
- Figur 11: eine Detailskizze eines alternativ zu den Figuren 9 und 10 einlaminierten DMS mit einem Material in Gitterstruktur und einem Material in Partikelform in den Datenträgerkörper eingebracht.

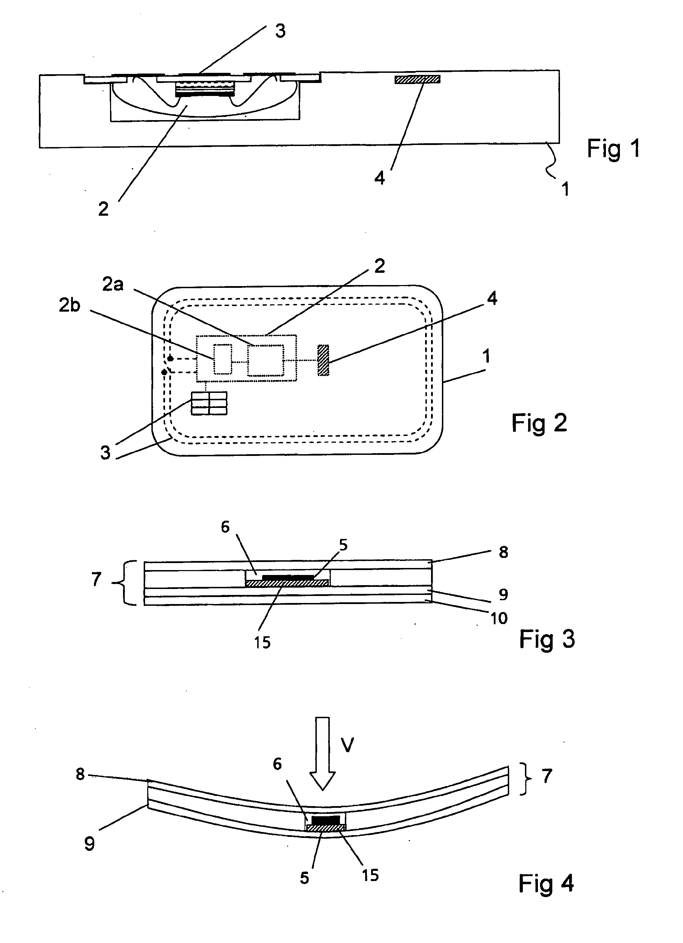

Figur 1 zeigt einen erfindungsgemäßen tragbaren Datenträger 1, hier in Form einer Chipkarte. In den Datenträgerkörper ist ein Chipmodul 2 eingebracht. Das Chipmodul 2 weist einen integrierten Halbleiterchip auf, im Folgenden auch als Schaltkreis bezeichnet. Ein Dehnungsmessstreifen 5 ist derart in den Datenträgerkörper eingebracht, dass er von außen für einen Benutzer des Datenträgers 1 nicht sichtbar ist. Alternativ kann er als Taster 4 ausgestaltet sein.

In Figur 2 ist eine Draufsicht auf den in Figur 1 dargestellten Datenträger 1 gezeigt. Der Halbleiterchip umfasst (nicht näher gezeigt) einen Prozessor und verschiedene Speicher, wie beispielsweise einen ROM-Speicher 2b, in dem zumindest Teile eines den Datenträger 1 steuernden Betriebssystems gespeichert sind, einen nicht flüchtigen, wieder beschreibbaren FLASH-(oder EEPROM-) Speicher zum Speichern von Applikationen und Daten sowie einen flüchtigen RAM-Arbeitsspeicher. Der FLASH-Speicher umfasst eine auf dem Prozessor ausführbare Echtheitsprüfapplikation, welche zusammen mit dem Dehnungsmessstreifen 5 eine Echtheitsprüfeinrichtung 2a des Datenträgers 1 bildet. In dem ROM-Speicher 2b ist weiterhin ein Referenzsignalverlauf gespeichert, welche die Echtheitsprüfvorrichtung 2a zur Prüfung der Echtheit des Datenträgers 1 mit mittels des Dehnungsmessstreifens 5 erzeugten Messsignals bei Verformung des Datenträgers 1 vergleicht.

Der Dehnungsmessstreifen 5 ist derart in den Datenträgerkörper integriert, dass mittels des Dehnungsmessstreifens 4 erfasste Verformungen, insbesondere Verbiegungen, aufgrund einer Änderung des elektrischen Widerstands pro Zeiteinheit erkannt werden können. Der Dehnungsmessstreifen 5 ist dazu mit dem Chipmodul 2 verbunden, wobei der erzeugte Signalverlauf bei Verformung des Datenträgers von der Echtheitsprüfapplikation verarbeitet wird. Im gezeigten Beispiel ist der Dehnungsmessstreifen 5 derart ausgebildet, dass Verformungen, d.h. insbesondere Dehnungen, Verbiegungen und Stauchungen, des Datenträgerkörpers entlang jeder der beiden Hauptachsen des Datenträgerkörpers gut erkannt werden können. Es ist gleichfalls möglich, den Dehnungsmessstreifen 4 lediglich derart auszubilden, dass im Wesentlichen nur Verformungen in einer Richtung zuverlässig erkannt werden können. Gleichfalls können mehrere Dehnungsmessstreifen 5 vorgesehen sein, welche an verschiedenen Positionen des Datenträgerkörpers angeordnet sind und deren gemessene Signalverläufe ein detailliertes Bild der Verformung des Datenträgerkörpers rekonstruieren lassen.

Ebenfalls dargestellt sind zwei Schnittstellen zu Kommunikation des Datenträgers 1 mit einem Terminal, auch als Kartenlesegerät bezeichnet. Die Schnittstellen sind insbesondere kontaktbehaftet, über Kontaktfelder mit dem Chipmodul 2 verbunden, oder kontaktlos, über Nahfeldantennen in Form von Leiterbahnschleifen mit dem Chipmodul 2 verbunden, ausgeführt.

In Figur 3 ist eine detailliertere Darstellung des in Figur 1 dargestellten Datenträgers 1 gezeigt. Der Aufbau 7 des Datenträgerkörpers ist hier mehrschichtig, wobei eine Schicht 8 aus Polyvinylchlorid, kurz PVC, eine Schicht 9 aus Polyethylenterephthalat, kurz PET, eine Schicht 10 aus Polycarbonat, kurz PC. In einem alternativen Schichtaufbau 7 ist die Schicht 8 aus Polyethylenenterephtalat mit Glycol, kurz PETG, die Schicht 9 aus PVC und die Schicht 10 wieder aus PETG.

Die Materialien der Schichten sind nur beispielhaft und in keiner Weise einschränkend auf den Erfindungsgegenstand. Andere, insbesondere zusätzliche Schichten aus gleichen oder anderen Materialien können ebenfalls vorgesehen sein. Die Dicken der einzelnen Schichten können von einigen wenigen µm bis zu hunderten µm variieren. Die Reihenfolge der Schichten kann ebenfalls beliebig variieren. Für den Aufbau und die Verwendung von Chipkarten allgemein wird der Fachmann auf die einschlägige Fachliteratur verwiesen, insbesondere die 5. Auflage des Fachbuches "Handbuch für Chipkarten" der Autoren Rankl/ Effing sowie dem Fachbuch "Vom Plastik zur Chipkarte" der Autoren Tarantino/ Haghiri, beide Exemplare erschienen beim Carl Hanser Verlag.

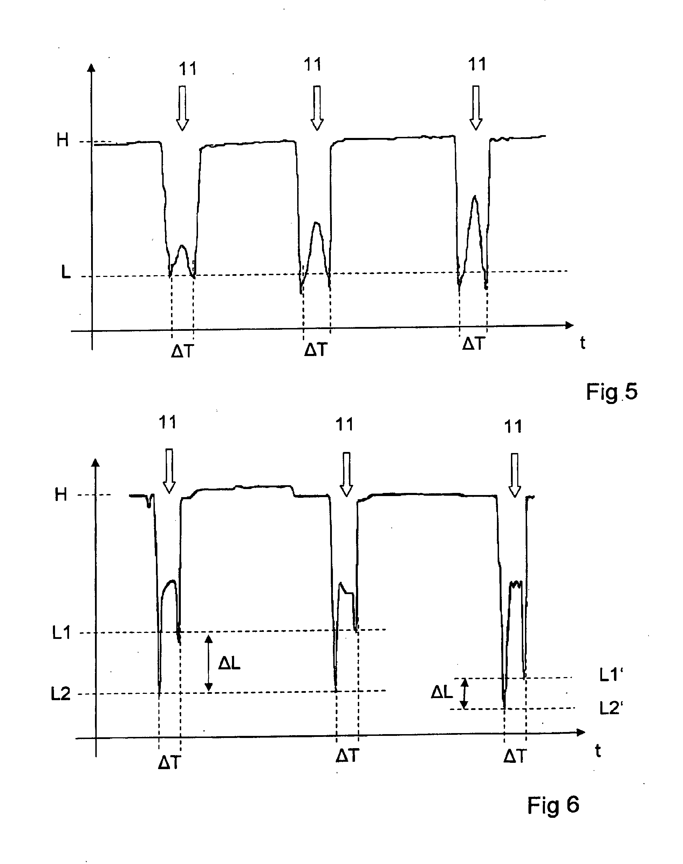

In Figur 3 ist ein Dehnungsmessstreifen 5 in den Datenträgerkörper integriert. Das Einbringen erfolgt bevorzugt durch Bedrucken einer der Schichten 7 bis 9 mit einem leitfähigen Material und anschließendem Einlaminieren. Der DMS 5 ist vollflächig mittels Klebemittels 15 auf einer unterhalb des DMS 5 befindlichen Schicht fixiert. Dieses Klebemittel 15 kann alternativ auch nur teilflächig unterhalb des DMS 5 angeordnet sein. In einer weiteren Alternative wird auf das Klebemittel 15 verzichtet. Der DMS 5 ist in der Figur 3 mit einem Lufteinschluss 6 in den Datenträgerkörper eingebracht. Sowohl das Klebemittel 15 als auch der Lufteinschluss 6 haben einen enormen Einfluss auf den vom DMS 5 erzeugten Signalverlauf bei Verformung des Datenträgers 1, wie anhand der Figuren 5 bis 8 noch näher erläutert wird. Der Aufbau 7 des Datenträgerkörpers ist insbesondere dergestalt, dass nach Fertigung des Körpers eine gewisse mechanische Spannung im Datenträgerkörper vorherrscht. Dies wird insbesondere durch das direkte Laminieren von Schichten 8 bis 10 aus unterschiedlichem Material erreicht, da sich die einzelnen Materialien der Schichten 8 bis 10 durch unterschiedliche Wärmeausdehnungskoeffizienten unterschiedlich beim Laminierprozess ausdehnen. Beim anschließenden Abkühlen kommt es zu dem mechanischen Verspannen, welches bei Verformung zu datenträgerkörperindividuellen Signalverläufen des Dehnungsmessstreifens 5 führt. Das mechanische Vorspannen kann durch minimales relatives Verdrehen der Kunststofffolien 8 bis 10 untereinander ebenfalls erreicht werden bzw. noch verstärkt werden.

In Figur 4 ist das Verformen V des Datenträgerkörpers dargestellt. Aufgrund der Verformung V des Datenträgerkörpers verformt sich ebenfalls der eingebrachte Dehnungsmessstreifen 5. Die Verformung V des Dehnungsmessstreifens 5 hat eine Änderung des elektrischen Widerstandswerts pro Zeiteinheit des Dehnungsmessstreifens 5 im Vergleich zum Widerstandswert im unverformten Zustand zur Folge. Der Verlauf der Widerstandsänderung pro Zeit wird in der Anmeldung als Signalverlauf verstanden. Aus dem während der Verformung V gemessenen Widerstandssignalverlaufs lässt sich auf die Echtheit des Datenträgers 1 schließen. Bevorzugt wird die Verformung V mit einem, in einer früheren Phase, beispielsweise während der Personalisierung, erzeugten Referenzwiderstandssignalverlauf verglichen. Dieser Referenzverlauf ist bevorzugt in einem nicht flüchtigen Speicherbereich 2b auf dem Datenträger 1 abgelegt.

Um den Datenträger 1 derart zu personalisieren, wird in einem ersten Schritt der zumindest eine Dehnungsmessstreifen 5 in den Datenträgerkörper 1 eingebracht. Dabei erfolgt die Anordnung des Dehnungsmessstreifens 5 in dem Datenträgerkörper 1 hinsichtlich seiner Lage gegebenenfalls datenträgerindividuell, d.h. jeder Datenträgerkörper 1 unterscheidet sich von einem anderen, gleichartigen Datenträgerkörper 1 dadurch, dass die Lage, die Ausrichtung und die Position des Dehnungsmessstreifens 5 in dem Datenträgerkörper 1 zumindest in gewisser Weise abweicht. Alternativ oder zusätzlich können sich die entsprechenden Datenträger 1 auch darin unterscheiden, dass Dehnungsmessstreifen 5 verschiedenen Typs, insbesondere mit verschiedenen Widerstandswerten, eingebracht worden sind. Dies hat zur Folge, dass bei identischer Verformung V der entsprechenden Datenträger 1 in vorgegebener Weise, die während der Verformung V gemessenen Signalverläufe der jeweiligen Dehnungsmessstreifen 5 voneinander abweichen.

In einem zweiten Schritt der Personalisierung wird der Datenträgerkörper des Datenträgers 1 in einer vorgegebenen Weise, beispielsweise definiert durch eine Anordnung in einer Aufnahmeschale verformt. Dabei wird in einem dritten Schritt ein elektrischer Referenzsignalverlauf des Dehnungsmessstreifens 5 ermittelt und in einem vierten Schritt wird dieser Referenzsignalverlauf in dem nichtflüchtigen Speicher 2b des Datenträgers 1 gespeichert.

Ein derart personalisierter Datenträger 1 kann dann mittels der Echtheitsprüfvorrichtung 2a auf seine Echtheit geprüft werden, d.h. es wird geprüft, ob der in den Datenträgerkörper integrierte Schaltkreis 2 mit dem ursprünglich eingesetzten Schaltkreis 2 übereinstimmt. Eine Manipulation des Datenträgers 1, welche in einem Austauschen des Schaltkreises 2 besteht, kann mittels des nachfolgend beschriebenen Echtheitsprüfverfahrens zuverlässig erkannt werden.

In einem ersten Schritt wird der Datenträgerkörper 1 dabei in einer vorgegebenen Weise verformt. Diese Verformung V entspricht exakt der Verformung V, welche im ersten Schritt der vorstehend beschriebenen Personalisierung durchgeführt worden ist. Eine die entsprechende Verformung vorgebende Aufnahmeeinrichtung oder dergleichen kann ebenfalls der in dem Personalisierungsverfahren verwendeten Verformungsvorrichtung entsprechen.

Bei der vorgegebenen Verformung V wird von der Echtheitsprüfvorrichtung 2a ein Vergleichssignalverlauf des Dehnungsmessstreifens 5 gemessen. Dieser Vergleichssignalverlauf wird durch die Echtheitsprüfvorrichtung 2a anschließend mit dem in dem Datenträger 1 während der Personalisierung gespeicherten Referenzsignalverlaufs verglichen. Stimmen beide Werte überein, so verifiziert die Echtheitsprüfvorrichtung 2a den Datenträger 1 als echt, d.h. der Datenträger 1 wurde nicht manipuliert. Im gegenteiligen Fall stellt sie eine Manipulation fest. Die Echtheitsprüfapplikation 2a kann dann beispielsweise dem Betriebssystem des Datenträgers 1 die Manipulation anzeigen. Bevorzugt läuft die Echtheitsprüfapplikation in einem nichtflüchtigen Speicher 2b des Datenträgers, sodass nachträgliches Manipulieren der Echtheitsprüfung nicht erfolgen kann.

In einer Ausführungsform ist der Dehnungsmessstreifen 5 als ein Taster 4 ausgebildet, sodass durch Druck auf den Dehnungsmessstreifens 5 und der zwangsläufig erfolgenden Verformung V ein Schaltsignal erzeugt wird. Da dieses Schaltsignal digitaler Natur ist, kann das Schaltsignal sehr gut detektiert werden, auch wenn aufgrund der vorhergehenden und nachfolgend beschriebenen Maßnahmen der Signalverlauf datenträgerindividuell erfolgt.

In den Figuren 5 bis 8 sind nun beispielhafte Signalverläufe dargestellt, welche aufgrund des Aufbaus des Datenträgerkörpers datenträgerkörperindividuell sind. Alle Signalverläufe sind Tastersignale, sodass der DMS 5 als Eingabemittel 4 im Datenträger 1 eingebracht ist. Bei Betätigung des Tasters 4 wird nun nicht nur der logische Übergang vom High- Pegel H zum Low-Pegel L mittels einer Schwellwert- Hysterese überprüft, sondern auch der erhaltene Signalverlauf mit dem abgelegten Referenzsignalverlauf verglichen.

In Figur 5 wird der Taster 4 dreimal betätigt, wobei in den Datenträger 1 ein DMS 5 ohne Lufteinschluss 6 einlaminiert wurde. In einer entsprechenden Auswertschaltung lässt sich nun die Unterschreitung des Low- Pegels L auswerten. Für den Signalverlauf des in Figur 5 dargestellten Signals ist charakteristisch, dass jeder Tastendruck 11 eine zweimalige Unterschreitung des Low- Pegels L für eine bestimmte Zeitdifferenz ΔT zur Folge hat. Die Zeit ΔT sowie die Anzahl der Unterschreitung des Low- Pegels L ist bei jedem Tastendruck 11 identisch und ist als ein datenträgerindividueller Signalverlauf für eine Echtheitsüberprüfung verwendbar. Alternativ kann die Auswertung des Signalverlaufs mittels Frequenzanalyseverfahren durchgeführt werden, wobei das Signal anhand der darin befindlichen Grundfrequenzen ausgewertet wird.

In der Figur 6 wird der Taster 4 ebenfalls dreimal betätigt, wobei in den Datenträger 1 ein DMS 5 mit teilweisem Lufteinschluss 6 unterhalb bzw. oberhalb des DMS 5 einlaminiert wurde. Für den Signalverlauf des in Figur 6 dargestellten Signals ist charakteristisch, dass jeder Tastendruck 11 eine einmalige Unterschreitung des Low- Pegels L1 sowie eine einmalige Unterschreitung des Low- Pegels L2 für eine bestimmte Zeitdifferenz ΔT zur Folge hat. Die Zeit ΔT sowie die Differenz ΔL der beiden Low- Pegel L1 und L2 können als ein datenträgerindividueller Signalverlauf für eine Echtheitsüberprüfung verwendet werden. Allein die Tatsache unterschiedlicher Low-Pegel L1 und L2 kann ausgewertet werden. Alternativ kann die Auswertung des Signalverlaufs mittels Frequenzanalyseverfahren durchgeführt werden, wobei das Signal anhand der darin befindlichen Grundfrequenzen ausgewertet wird.

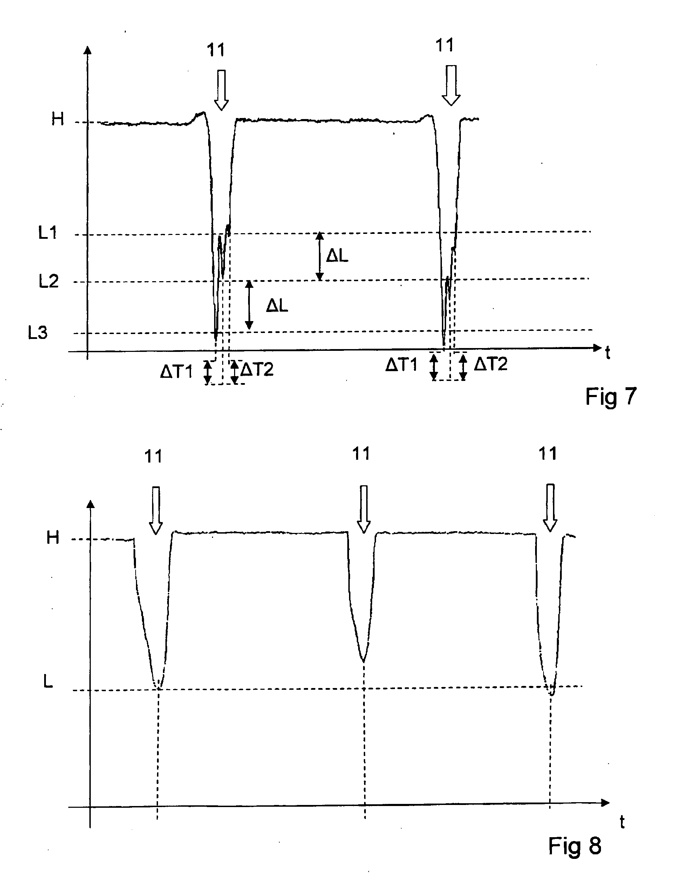

In Figur 7 wird der Taster 4 zweimal betätigt, wobei in den Datenträger 1 ein DMS 5 mit teilweisem Lufteinschluss 6 an den Eckbereichen des DMS 5 einlaminiert wurde. Der Lufteinschluss 6 ist hier an maximal 10% der Gesamtfläche des DMS 5. Hier werden im Unterschied zu Figur 6 drei Low- Pegel L1, L2 und L3 bei jedem Tastendruck 11 erhalten, wobei zwischen den einzelnen Differenzen der Low- Pegel ΔL1 und ΔL2 eine gewisse Zeitdifferenz ΔT1 bzw. ΔT2 als datenträgerindividuelles Merkmal detektierbar ist. Alternativ kann die Auswertung des Signalverlaufs mittels Frequenzanalyseverfahren durchgeführt werden, wobei das Signal anhand der darin befindlichen Grundfrequenzen ausgewertet wird.

Zwar kann der Lufteinschluss 6 nicht kontrolliert in den Datenträger 1 eingebracht werden, allerdings kann der individuell entstehende Effekt der Figuren 5, 6 oder 7 sehr gut ausgewertet werden. Die Verzerrungen im Signalverlauf entstehen unter anderem aufgrund des Versatzes der Laminierschichten und sind datenträgerindividuell.

In Figur 8 wird der Taster 4 dreimal betätigt, wobei der DMS 5 ohne Klebemittel 15 in den Datenträgerkörper einlaminiert worden ist. Hier wird der Low- Pegel L bei jedem Tastendruck 11 nur ein Minimum aufweisen, welches als Echtheitsmerkmal verifiziert werden könnte.

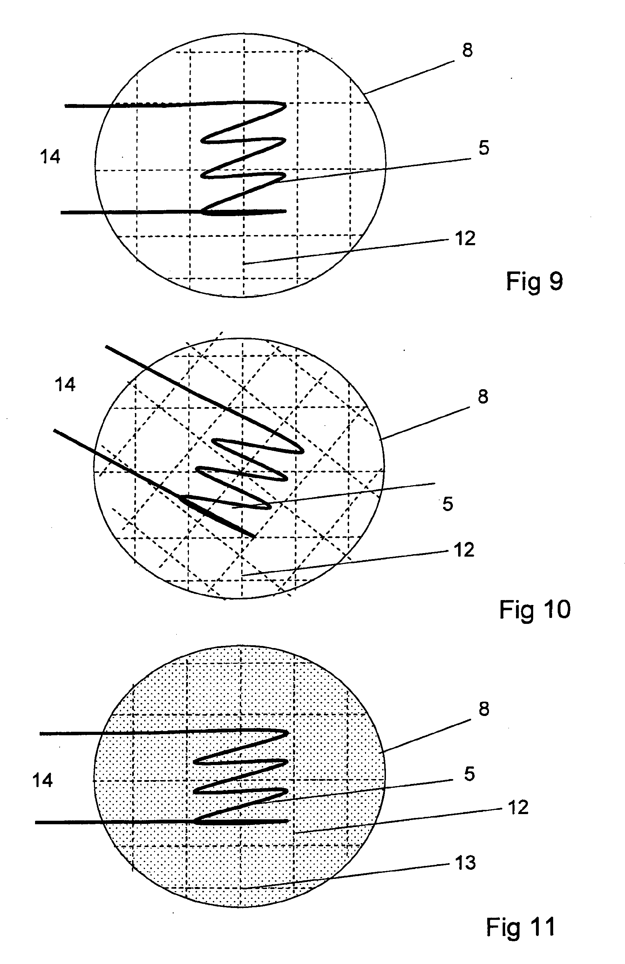

In der Figur 9 ist ein zusätzliches Gewebegeflecht unterhalb des DMS 5 in den Datenträgerkörper eingebracht. Die Gitterstruktur 12 ist dabei nach dem DMS 5 ausgerichtet. Die elektrischen Anschlüsse 14 werden mit der Echtheitsprüfvorrichtung 2a verbunden, um den Signalverlauf des bei Verformung entstehenden Signals des DMS auswerten zu können.

Alternativ kann, wie in Figur 10 dargestellt, ein zweites Geflecht 45 Grad versetzt zu dem ersten Geflecht 12 in den Datenträger 1 eingebracht sein. Das Material des ersten Geflechts ist Kohlefaser, während das zweite Geflecht ein glasfaserartiges Material ist. Alternativ kann auch ein Gewebegeflecht einlaminiert sein. Zu Steigerung der Signalindividualität wurde der DMS 5 ebenfalls um 45 Grad gedreht in den Datenträgerkörper eingebracht.

In Figur 11 ist alternativ zu dem zweiten Geflecht ein zusätzliches Material in Form von Partikeln 13 in den Datenträger 1 eingebracht. Die Größe, Art, Form und Anzahl der Partikel ist für den Erfindungsgegenstand nicht relevant.

Alle in den Figuren beschriebenen Maßnahmen können beliebig miteinander kombiniert und variiert werden. Insbesondere ist es Ziel dieser Anmeldung, das erzeugte Messsignal des DMS 5 derart datenträgerindividuell auszugestalten, dass eine einfache Manipulation des Datenträgers nicht erfolgen kann.

### Bezugszeichenliste

- 1: Tragbarer Datenträger
- 2: Chipmodul mit Halbleiterchip
- 2a: Echtheitsprüfvorrichtung
- 2b: nichtflüchtiger Speicher
- 3: Kommunikationsschnittstelle (kontaktbehaftet bzw. kontaktlos)
- 4: Taste
- 5: Dehnungsmessstreifen
- 6: Lufteinschluss
- 7: Schichtaufbau des Datenträgerkörpers
- 8: PVC - Schicht
- 9: PET - Schicht
- 10: PC - Schicht
- 11: Tastendruck
- 12: Gitterstruktur
- 13: Partikel
- 14: Elektrische Anschlüsse
- 15: Klebemittel
- H: High- Pegel
- L: Low- Pegel
- L1: Low- Pegel 1
- L2: Low- Pegel 2
- L3: Low- Pegel 3
- ΔL: Differenz der Low- Pegel
- ΔT1: erste Zeitdifferenz
- ΔT2: zweite Zeitdifferenz
- V: Verformung

## Patentansprüche

1. Tragbarer Datenträger (1), insbesondere eine Chipkarte, mit einem verformbaren Datenträgerkörper (7) und einer Echtheitsprüfvorrichtung (2a), wobei die Echtheitsprüfvorrichtung (2a) zumindest einen in den Datenträgerkörper (7) eingebrachten Dehnungsmessstreifen (5) umfasst und durch den Dehnungsmessstreifen aufgrund einer Verformung des Datenträgers ein messbares Signal erzeugbar ist, **dadurch gekennzeichnet, dass** die Echtheit des Datenträgers (1) aufgrund eines datenträgerindividuellen Verlaufs des messbaren Signals verifizierbar ist und wobei aufgrund des Aufbaus des Datenträgerkörpers (7) datenträgerindividuelle lineare und/oder nichtlineare Verzerrungen (H, L, L1, L2, L3, ΔL, ΔT1, ΔT2) im Signalverlauf enthalten sind.

2. Datenträger (1) nach Anspruch 1, wobei der Dehnungsmessstreifen (5) als Eingabemittel in den Datenträgerkörper (7) eingebracht ist und die benutzerseitige Betätigung des Eingabemittels die Verformung (V) des Datenträgers (1) verursacht.

3. Datenträger (1) nach einem der vorhergehenden Ansprüche, wobei der Datenträgerkörper (7) eine mechanische Spannung aufweist und die mechanische Spannung aufgrund des Aufbaus (7) und/ oder der Fertigung des Datenträgers (1) vorliegt.

4. Datenträger (1) nach Anspruch 3, wobei der Datenträgerkörper (7) aus unterschiedlichen Kunststoffschichten (8, 9, 10) aufgebaut ist und die mechanische Spannung aufgrund des Laminierens der Kunststoffschichten (8, 9, 10) und/ oder das Verdrehen der Kunststoffschichten (8, 9, 10) relativ zueinander während des Laminiervorgangs entstehen.

5. Datenträger (1) nach einem der vorhergehenden Ansprüche, wobei der datenträgerindividuelle Verlauf des Signals durch Einbringen des Dehnungsmessstreifens mittels Klebemittels (15) mit oder ohne Lufteinschluss (6) erhalten ist.

6. Datenträger (1) nach einem der vorhergehenden Ansprüche, wobei zumindest ein zusätzliches Material in den Datenträgerkörper (7) eingebracht ist, wodurch der datenträgerindividuelle Verlauf des Signals erhalten ist.

7. Datenträger (1) nach Anspruch 6, wobei das zusätzliche Material als Gitterstruktur (12) in den Datenträgerkörper (7) eingebracht ist.

8. Datenträger (1) nach einem der Ansprüche 6 oder 7, wobei das zusätzliche Material in Form von Partikeln (13) in den Datenträgerkörper (7) eingebracht ist.

9. Datenträger (1) nach einem der Ansprüche 6 bis 8, wobei das zusätzliche Material ein Glasfaser-, Kohlefaser und/oder Gewebematerial ist.

10. Datenträger (1) nach einem der vorhergehenden Ansprüche, wobei der datenträgerindividuelle Verlauf des Signals aufgrund der Lage des Dehnungsmessstreifens (5) im Datenträgerkörper (7) erhalten ist.

11. Datenträger (1) nach einem der vorhergehenden Ansprüche, wobei zum Prüfen der Echtheit ein Referenzwert herangezogen wird und dieser Referenzwert in einem nichtflüchtigen Speicherbereich (2b) eines Halbleiterchips (2) des Datenträgers (1) abgelegt ist.

12. Echtheitsmerkmal für einen tragbaren Datenträger aufweisend einen Dehnungsmessstreifen (5) zur Erzeugung eines datenträgerindividuellen Verlauf eines Signals durch Verformung des Datenträgerkörpers, **dadurch gekennzeichnet, dass** die Echtheit durch Auswerten des Signalverlaufs verifizierbar ist und der Signalverlauf lineare und /oder nichtlineare Verzerrungen (H, L, L1, L2, L3, ΔL, ΔT1, ΔT2) aufgrund des Aufbaus des Datenträgerkörpers aufweist.

13. Verfahren zur Personalisierung eines tragbaren Datenträgers nach einem der Ansprüche 1 bis 11, **gekennzeichnet durch** die Schritte:
- Einbringen zumindest eines Dehnungsmessstreifens in den Datenträgerkörper;
- Verformen des Datenträgerkörpers in einer vorgegebenen Weise;
- Messen eines Signals mit datenträgerindividuellem Verlauf während der Verformung;
- Speichern des datenträgerindividuellen Verlaufs als Referenzwert in einem Speicherbereich eines Halbleiterchips des Datenträgers.

14. Verfahren zur Echtheitsprüfung eines tragbaren Datenträgers nach einem der Ansprüche 1 bis 11, **gekennzeichnet durch** die Schritte:
- Verformen des Datenträgerkörpers in einer vorgegebenen Weise;
- Messen eines Signals mit datenträgerindividuellen Verlauf während der Verformung, erzeugt **durch** zumindest einen in den Datenträgerkörper eingebrachten Dehnungsmessstreifen, wobei das Messen mittels einer Echtheitsprüfvorrichtung des Datenträgers erfolgt;
- Vergleichen des datenträgerindividuellen Verlaufs mit einem in dem Datenträger gespeicherten, dem vorgegebenen Verformung entsprechenden Verlauf des Signals **durch** die Echtheitsprüfvorrichtung.
- Verifizieren der Echtheit des Datenträgers bei Übereinstimmung des gemessenen Signalverlaufs mit dem gespeicherten Signalverlauf.

## Claims

1. A portable data carrier (1), in particular a chip card, having a deformable data carrier body (7) and an authenticity-checking apparatus (2a), wherein the authenticity-checking apparatus (2a) has at least one strain gauge strip (5) integrated in the data carrier body (7), and a measurable signal is producible by the strain gauge strip on the basis of a deformation of the data carrier, **characterized in that** the authenticity of the data carrier (1) is verifiable on the basis of a data-carrier individual pattern of the measurable signal, and wherein, due to the structure of the data carrier body (7), data-carrier individual linear and/or non-linear distortions (H, L, L1, L2, L3, ΔL, ΔTI, ΔT2) are contained in the signal pattern.

2. The data carrier (1) according to claim 1, wherein the strain gauge strip (5) is integrated in the data carrier body (7) as an input means and the user's operation of the input means causes the deformation (V) of the data carrier (1).

3. The data carrier (1) according to any of the preceding claims, wherein the data carrier body (7) has a mechanical tension and the mechanical tension is present due to the structure (7) and/or the manufacture of the data carrier (1).

4. The data carrier (1) according to claim 3, wherein the data carrier body (7) is constructed of different plastic layers (8, 9, 10) and the mechanical tension results from the lamination of the plastic layers (8, 9, 10) and/or the twisting of the plastic layers (8, 9, 10) relative to each other during the lamination process.

5. The data carrier (1) according to any of the preceding claims, wherein the data-carrier individual pattern of the signal is obtained by integrating the strain gauge strip by means of an adhesive means (15) with or without inclusion of air (6).

6. The data carrier (1) according to any of the preceding claims, wherein at least one additional material is integrated in the data carrier body (7), whereby the data-carrier individual pattern of the signal is obtained.

7. The data carrier (1) according to claim 6, wherein the additional material is integrated in the data carrier body (7) as a grid structure (12).

8. The data carrier (1) according to any of the claims 6 or 7, wherein the additional material is integrated in the data carrier body (7) in the form of particles (13).

9. The data carrier (1) according to any of the claims 6 to 8, wherein the additional material is a glass fiber, carbon fiber and/or fabric material.

10. The data carrier (1) according to any of the preceding claims, wherein the data-carrier individual pattern of the signal is obtained on the basis of the position of the strain gauge strip (5) in the data carrier body (7).

11. The data carrier (1) according to any of the preceding claims, wherein for checking the authenticity a reference value is used, and said reference value is stored in a nonvolatile memory area (2b) of a semiconductor chip (2) of the data carrier (1).

12. An authenticity feature for a portable data carrier having a strain gauge strip (5) for producing a data-carrier individual pattern of a signal by deformation of the data carrier body, **characterized in that** the authenticity is verifiable by evaluating the signal pattern, and the signal pattern has linear and/or nonlinear distortions (H, L, L1, L2, L3, ΔL, ΔT1, ΔT2) due to the structure of the data carrier body.

13. A method for personalizing a portable data carrier according to any of the claims 1 to 11, **characterized by** the steps of:
- integrating at least one strain gauge strip in the data carrier body;
- deforming the data carrier body in a predetermined fashion;
- measuring a signal having a data-carrier individual pattern during the deformation;
- storing the data-carrier individual pattern as a reference value in a memory area of a semiconductor chip of the data carrier.

14. A method for checking the authenticity of a portable data carrier according to any of the claims 1 to 11, **characterized by** the steps of:
- deforming the data carrier body in a predetermined fashion;
- measuring a signal having a data-carrier individual pattern during the deformation, produced by at least one strain gauge strip integrated in the data carrier body, wherein the measuring takes place by means of an authenticity-checking apparatus of the data carrier;
- comparing by the authenticity-checking apparatus the data-carrier individual pattern with a signal pattern corresponding to the predetermined deformation that is stored in the data carrier;
- verifying the authenticity of the data carrier when the measured signal pattern matches the stored signal pattern.

## Revendications

1. Support de données (1) portable, notamment une carte à puce, ayant un corps de support de données (7) déformable et un dispositif de vérification d'authenticité (2a), le dispositif de vérification d'authenticité (2a) comprenant au moins une jauge extensométrique (5) insérée dans le corps de support de données (7) et, par la jauge extensométrique, sur la base d'une déformation du support de données, un signal mesurable pouvant être généré, **caractérisé en ce que** l'authenticité du support de données (1) est vérifiable sur la base d'une courbe du signal mesurable individuelle au support de données, et, sur la base de la structure du corps de support de données (7), des distorsions (H, L, L1, L2, L3, ΔL, ΔT1, ΔT2) linéaires et/ou non linéaires individuelles au support de données étant inclues dans la courbe du signal.

2. Support de données (1) selon la revendication 1, la jauge extensométrique (5) étant insérée en tant que moyen d'entrée dans le corps de support de données (7), et l'actionnement du moyen d'entrée par l'utilisateur provoquant la distorsion (V) du support de données (1).

3. Support de données (1) selon une des revendications précédentes, le corps de support de données (7) présentant une tension mécanique , et la tension mécanique étant due à la structure (7) et/ou à la fabrication du support de données (1).

4. Support de données (1) selon la revendication 3, le corps de support de données (7) étant constitué de différentes couches de matière plastique (8, 9, 10), et la tension mécanique étant engendrée par le laminage des couches de matière plastique (8, 9, 10) et/ou la courbure des couches de matière plastique (8, 9, 10) les unes par rapport aux autres étant engendrée lors du processus de laminage.

5. Support de données (1) selon une des revendications précédentes, la courbe du signal individuelle au support de données étant obtenue par insertion de la jauge extensométrique au moyen d'adhésif (15) avec ou sans inclusion d'air (6).

6. Support de données (1) selon une des revendications précédentes, au moins un matériau supplémentaire étant inséré dans le corps de support de données (7), moyennant quoi la courbe du signal individuelle au support de données est obtenue.

7. Support de données (1) selon la revendication 6, le matériau supplémentaire étant inséré en tant que structure réticulaire (12) dans le corps de support de données (7).

8. Support de données (1) selon une des revendications 6 ou 7, le matériau supplémentaire étant inséré sous forme de particules (13) dans le corps de support de données (7).

9. Support de données (1) selon une des revendications de 6 à 8, le matériau supplémentaire étant un matériau en fibre de verre, en fibre de carbone et/ou tissulaire.

10. Support de données (1) selon une des revendications précédentes, la courbe du signal individuelle au support de données étant obtenue sur la base de la position de la jauge extensométrique (5) dans le corps de support de données (7).

11. Support de données (1) selon une des revendications précédentes, une valeur de référence étant utilisée pour la vérification de l'authenticité, et cette valeur de référence étant enregistrée dans une zone de mémoire (2b) non volatile d'une puce semi-conductrice (2) du support de données (1).

12. Caractéristique d'authenticité destinée à un support de données portable comprenant une jauge extensométrique (5) destinée à la génération d'une courbe d'un signal individuelle au support de données par déformation du corps de support de données, **caractérisé en ce que** l'authenticité est vérifiable par le biais de l'évaluation de la courbe du signal et **en ce que** la courbe du signal comprend des distorsions (H, L, L1, L2, L3, ΔL, ΔT1, ΔT2) linéaires et/ou non linéaires sur la base de la structure du corps de support de données (7).

13. Procédé de personnalisation d'un support de données portable selon une des revendications de 1 à 11, **caractérisé par** les étapes:
∘ insertion d'au moins une jauge extensométrique dans le corps de support de données (7);
∘ déformation du corps de support de données d'une manière prédéterminée;
∘ mesure d'un signal à courbe individuelle au support de données (1) durant la déformation;
∘ mémorisation de la courbe individuelle au support de données (1) en tant que valeur de référence dans une zone de mémoire d'une puce semi-conductrice du support de données.

14. Procédé de vérification d'authenticité d'un support de données portable selon une des revendications de 1 à 11, **caractérisé par** les étapes:
∘ déformation du corps de support de données d'une manière prédéterminée;
∘ mesure d'un signal à courbe individuelle au support de données (1) durant la déformation, générée par au moins une jauge extensométrique insérée dans le corps de support de données, la mesure ayant lieu au moyen d'un dispositif de vérification d'authenticité du support de données;
∘ comparaison, par le dispositif de vérification d'authenticité, de la courbe individuelle au support de données avec une courbe du signal mémorisée dans le support de données et correspondant à la déformation prédéterminée;
o vérification de l'authenticité du support de données en cas de concordance entre la courbe de signal mesurée et la courbe de signal mémorisée.
